# EUROPEAN PATENT APPLICATION

(11) **EP 4 779 793 A1**
(43) Date of publication of application: **22.07.2026**
(21) Application number: 25867185.8
(22) Date of filing: 23.10.2025
(51) Int. Cl.: H01M 50/627, H01M 10/052

(54) **ELECTROLYTE INJECTION DEVICE**

(30) Priority: 26.11.2024 KR 20240171298
(71) Applicant: LG ENERGY SOLUTION, LTD., Seoul 07335 (KR)
(72) Inventor: KANG, Chan Woo, Daejeon 34122 (KR); LEE, Chang Yong, Daejeon 34122 (KR); KIM, Jung Hyuk, Daejeon 34122 (KR); JOO, Jae Hwan, Daejeon 34122 (KR)
(74) Representative: Goddar, Heinz J.
(86) International application number: PCT/KR2025/016909
(87) International publication number: WO 2026/116784

(57) **Abstract**

The present disclosure relates to an electrolyte injection device for injecting an electrolyte into a cylindrical battery case accommodating an electrode assembly. The device includes: a main body including an inlet formed at an upper part through which an electrolyte flows in, an outlet formed at a lower part through which the electrolyte is discharged, and an electrolyte flow path formed to communicate the inlet and the outlet; and a buffer cap coupled to the outlet, wherein the buffer cap includes an opening part formed to allow the electrolyte to pass therethrough and a buffer protrusion protruding toward the main body from a central position of the opening part to guide a discharge direction of the electrolyte.

## Description

### [Technical Field]

The present disclosure relates to an electrolyte injection device.

This application claims the benefit of Korean Patent Application No. 10-2024-0171298, filed on November 26, 2024, the disclosure of which is incorporated herein by reference.

### [Background]

Rechargeable secondary batteries have been proposed as a solution to air pollution caused by conventional gasoline vehicles, diesel vehicles, and the like using fossil fuels, and are receiving attention as power sources for devices requiring high output and large capacity, including electric vehicles, hybrid electric vehicles, and plug-in hybrid electric vehicles.

Such secondary batteries may also be classified depending on what structure an electrode assembly having a positive electrode/separator/negative electrode structure takes. Representative examples include a jelly-roll (wound-type) electrode assembly having a structure in which long sheet-type positive electrodes and negative electrodes are wound with a separator interposed therebetween; a stack-type (laminated-type) electrode assembly formed by sequentially stacking a plurality of positive electrodes and negative electrodes cut into units of a predetermined size with a separator interposed therebetween; and a stack/folding-type electrode assembly having a structure in which bi-cells or full cells, each formed by stacking a positive electrode and a negative electrode with a separator interposed therebetween in predetermined units, are wound.

A secondary battery has a structure in which an electrode assembly composed of a positive electrode, a negative electrode, and a separator interposed therebetween, together with an electrolyte, is stored in a battery case.

The secondary battery may be classified into a prismatic type, a pouch-type, and a cylindrical type depending on the shapes of the electrode assembly and the battery case.

Meanwhile, in a cylindrical battery case accommodating an electrode assembly, an electrolyte is injected through an opened upper part. At this time, due to the pressure of the injected electrolyte, a problem has occurred in that the upper end of the electrode assembly is damaged.

### [Summary]

### [Technical Problem]

Accordingly, the present disclosure has been devised to solve the above problems, and an object of the present disclosure is to provide an electrolyte injection device capable of injecting an electrolyte while minimizing damage to an electrode assembly.

Other objects and advantages of the present disclosure can be understood by the following description, and will become more apparent by embodiments of the present disclosure. In addition, it will be readily understood that the objects and advantages of the present disclosure can be realized by means and combinations thereof set forth in the claims.

### [Technical Solution]

According to the present disclosure, an electrolyte injection device is provided for injecting electrolyte into the interior of a cylindrical battery case that accommodates an electrode assembly.

The electrolyte injection device includes: a main body including an inlet formed at an upper part through which an electrolyte flows in, an outlet formed at a lower part through which the electrolyte is discharged, and an electrolyte flow path formed to communicate the inlet and the outlet; and a buffer cap coupled to the outlet, wherein the buffer cap includes an opening part formed to allow the electrolyte to pass therethrough and a buffer protrusion protruding toward the main body from a central position of the opening part to guide a discharge direction of the electrolyte.

The buffer cap includes: a coupling ring coupled to be fixed to the outlet; a buffer protrusion; and
at least one fixing bar coupled to the coupling ring and the buffer protrusion to fix the buffer protrusion, wherein the electrolyte may be discharged through the opening part between the coupling ring and the buffer protrusion.

The buffer protrusion includes: a base part directly coupled to the fixing bar; and a protruding part protruding upward from an upper part of the base part, wherein the protruding part may be formed in a shape of any one of a pyramid and a cone.

An inclination angle of the protruding part may be 50° to 85°.

The buffer protrusion further includes an air removal part protruding downward from a lower part of the base part, wherein a protruding height of the air removal part may be smaller than a protruding height of the protruding part.

The air removal part may be formed in a shape of any one of a pyramid and a cone.

An inclined surface of the air removal part may be gentler than an inclined surface of the protruding part.

An inclination angle of the air removal part may be 5° to 45°.

The fixing bar may have a cross-sectional shape of at least one of a straight line and a circle.

The buffer cap includes two or more fixing bars, and the opening part may be uniformly partitioned by the fixing bars.

Based on a horizontal plane, a ratio of an inner diameter of the coupling ring to an outer diameter of the buffer protrusion, or a ratio of the inner diameter of the coupling ring to a diameter of a circumscribed circle of the buffer protrusion, may be 1:0.2 to 1:0.5.

The electrolyte injection device may be disposed such that a lower end of the main body at which the outlet is located is coupled to an upper end of the battery case, thereby injecting the electrolyte into the battery case.
The electrode assembly may be accommodated in the battery case in a jelly-roll form.

### [Advantageous Effects]

According to the present disclosure, it is possible to minimize damage to the electrode assembly during an electrolyte injection process.

In addition, during electrolyte injection, it is possible to minimize bubble generation, thereby improving process efficiency.

### [Brief Description of the Drawings]

FIG. 1 is a perspective view of an electrolyte injection device and a secondary battery according to the present disclosure.
FIG. 2 is a cross-sectional view obtained by cutting the electrolyte injection device and the secondary battery of FIG. 1 in half.
FIG. 3 is a cross-sectional view showing cut surfaces of the electrolyte injection device and the secondary battery of FIG. 2.
FIG. 4 is a bottom perspective view of an electrolyte injection device according to a first embodiment of the present disclosure.
FIG. 5 is a cross-sectional view obtained by cutting the electrolyte injection device of FIG. 4 in half.
FIG. 6 is a cross-sectional view showing a cut surface of the electrolyte injection device of FIG. 5.
FIG. 7 is a plan view of a buffer cap included in the electrolyte injection device of FIG. 4.
FIG. 8 is a perspective view of a buffer protrusion included in the buffer cap of FIG. 7.
FIG. 9 is a schematic view showing a movement path of an electrolyte moving to an inclined surface of the buffer protrusion of FIG. 8.
FIG. 10 is a modified example of the buffer protrusion of FIG. 8.
FIG. 11 is a schematic view simply showing movement of an electrolyte in the electrolyte injection device of FIG. 4.
FIG. 12 is a bottom perspective view of an electrolyte injection device according to a second embodiment of the present disclosure.
FIG. 13 is a plan view of a buffer cap included in the electrolyte injection device of FIG. 12.
FIG. 14 is a bottom perspective view of an electrolyte injection device according to a third embodiment of the present disclosure.
FIG. 15 is a plan view of a buffer cap included in the electrolyte injection device of FIG. 14.
FIG. 16 is a perspective view of a buffer protrusion included in a buffer cap of an electrolyte injection device according to a fourth embodiment of the present disclosure.
FIG. 17 is a side view of the buffer protrusion of FIG. 16.
FIG. 18 is a schematic view showing a movement path of an electrolyte moving to an inclined surface of the buffer protrusion of FIG. 17.
FIG. 19 is a schematic view simply showing movement of an electrolyte in an electrolyte injection device including the buffer protrusion of FIG. 16.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

In describing each drawing, similar reference numerals are used for similar components. In the accompanying drawings, dimensions of structures are illustrated as enlarged relative to actual dimensions for clarity of the present disclosure. Terms used to describe various components are for convenience of understanding, and the components should not be limited by such terms. Such terms are used only for the purpose of distinguishing one component from another. For example, without departing from the scope of the present disclosure, a first component may be named a second component, and similarly, a second component may be named a first component. Singular expressions include plural expressions unless the context clearly indicates otherwise.

In the entire specification of the present disclosure, terms such as "include" or "have" are intended to specify the presence of stated features, numbers, steps, operations, components, parts, or combinations thereof, and should be understood not to preclude the presence or addition of one or more other features, numbers, steps, operations, components, parts, or combinations thereof.

Also, when a layer, film, region, plate, or the like is described as being "on" another part, this includes not only being "directly on" the other part but also having another part interposed therebetween. Conversely, when such a part is described as being "under" another part, this includes not only being "directly under" the other part but also having another part interposed therebetween. In addition, in the specification, being disposed "on" may include being disposed not only at the upper part but also at the lower part.

The present disclosure relates to an electrolyte injection device, and the electrolyte injection device of the present disclosure is characterized by reducing the fluid pressure of a discharged electrolyte to minimize damage to an electrode assembly.

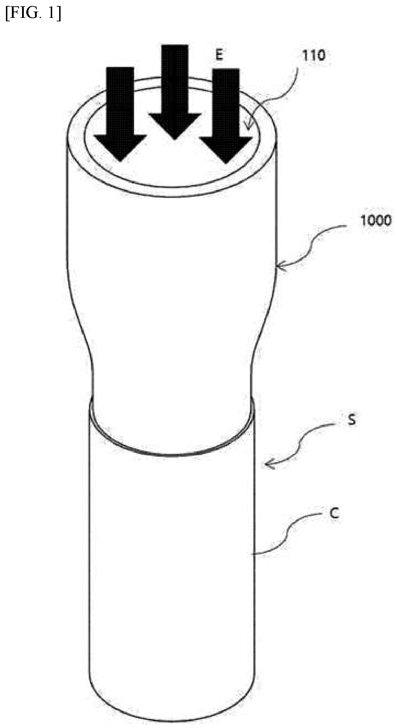

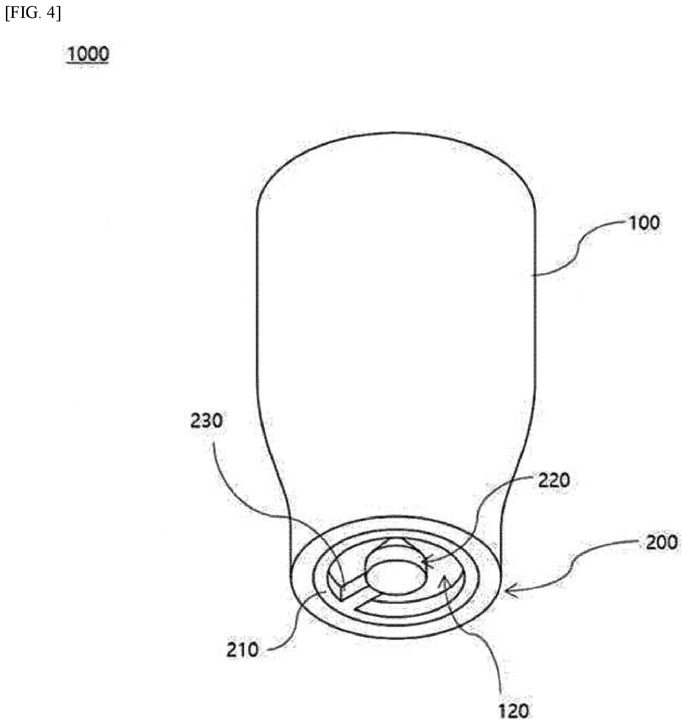

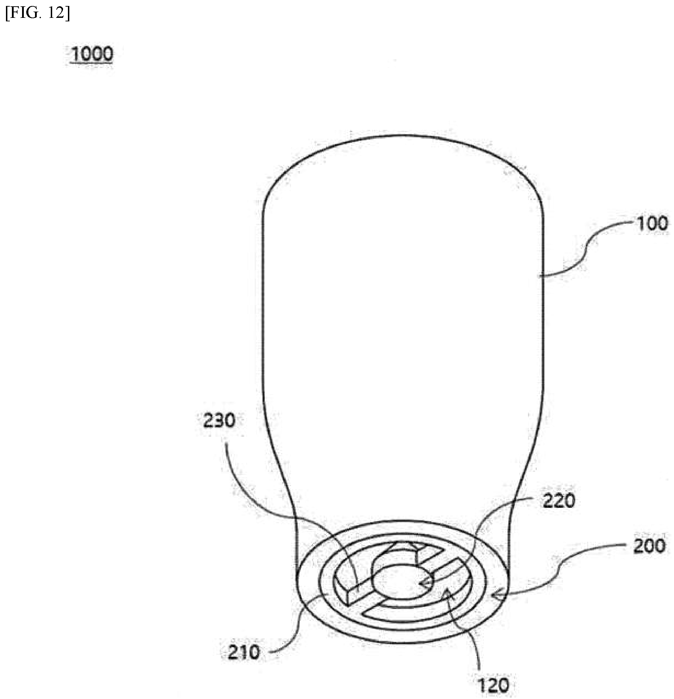

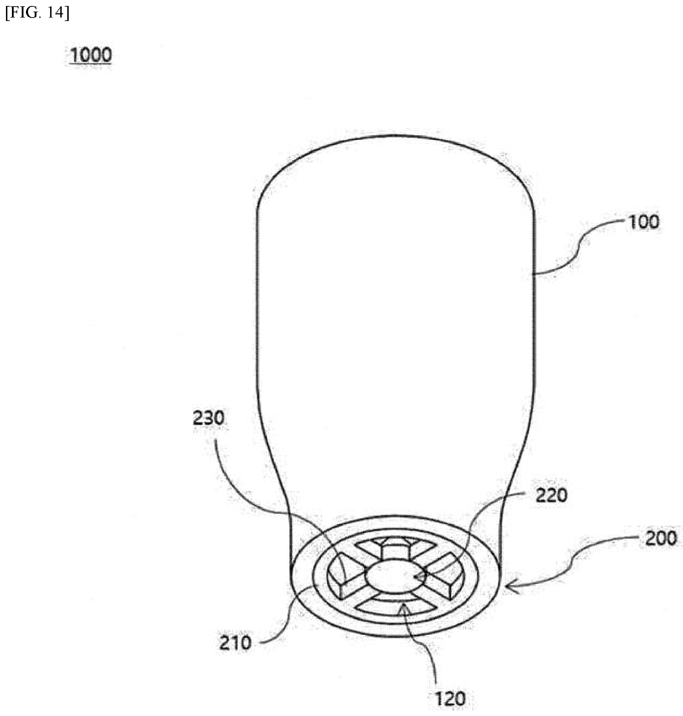

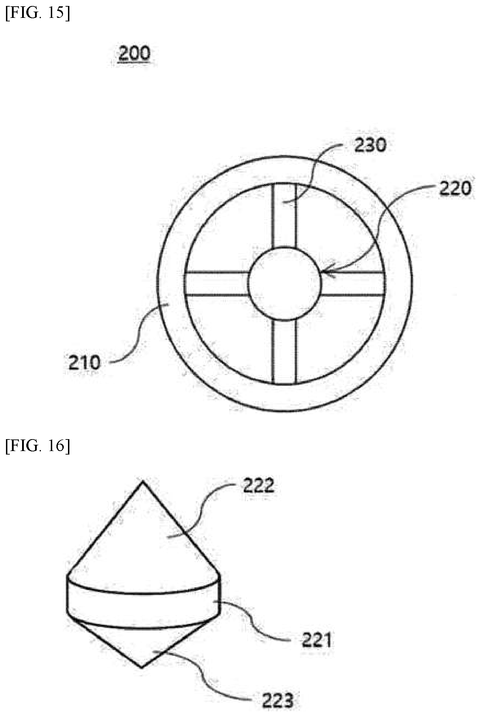

FIGS. 1 to 3 relate to the electrolyte injection device of the present disclosure, FIGS. 4 to 11 relate to an electrolyte injection device according to a first embodiment of the present disclosure, FIGS. 12 to 13 relate to an electrolyte injection device according to a second embodiment of the present disclosure, FIGS. 14 to 15 relate to an electrolyte injection device according to a third embodiment of the present disclosure, and FIGS. 16 to 19 relate to an electrolyte injection device according to a fourth embodiment of the present disclosure.

Hereinafter, with reference to the accompanying drawings, specific embodiments of the electrolyte injection device of the present disclosure will be described in detail. For reference, in the following description, directions such as front/rear and up/down/left/right indicating relative positions are provided to aid understanding of the disclosure, and unless otherwise defined, are based on directions shown in the drawings.

(Also, the longitudinal direction of a configuration refers to the direction corresponding to the surface having the longest length of the configuration shown in the drawings with respect to a horizontal direction, and the width direction refers to the direction orthogonal to the longitudinal direction with respect to the horizontal direction.)

The electrolyte injection device 1000 of the present disclosure is used to inject an electrolyte E into a cylindrical battery case C accommodating an electrode assembly A.

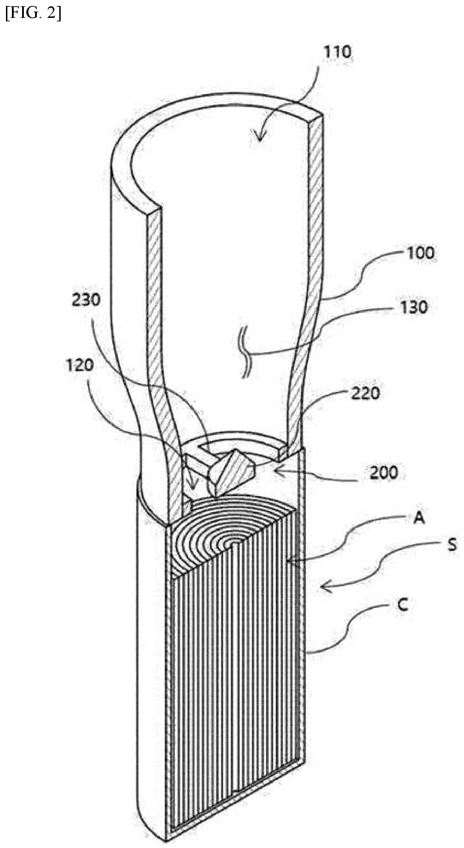

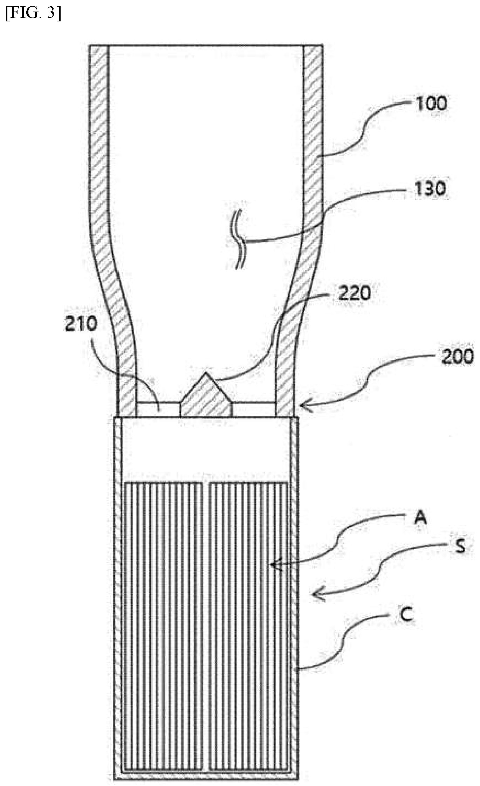

FIG. 1 is a perspective view of the electrolyte injection device 1000 and a secondary battery S of the present disclosure, FIG. 2 is a cross-sectional view obtained by cutting the electrolyte injection device 1000 and the secondary battery S of FIG. 1 in half, and FIG. 3 is a cross-sectional view showing cut surfaces of the electrolyte injection device 1000 and the secondary battery S of FIG. 2.

As shown in FIG. 1, the electrolyte injection device 1000 of the present disclosure is coupled to an upper part of a secondary battery S including a cylindrical battery case C, thereby injecting the electrolyte E into the battery case C.

The electrolyte E is supplied to an upper part of the electrolyte injection device 1000, and is injected into an upper part of the secondary battery S via the electrolyte injection device 1000.

As shown in FIGS. 2 and 3, the secondary battery S is in a state in which an electrode assembly A formed in a jelly-roll form by stacking a plurality of electrodes and separators is accommodated inside a cylindrical battery case C having an open upper part.

The jelly-roll electrode assembly A wound in the jelly-roll form is accommodated in the battery case C in an upright state. At this time, an upper end of the electrode assembly A is directly exposed to the outside through the opened upper part of the battery case C.

The electrolyte injection device 1000 includes a main body 100 including an electrolyte flow path 130 therein, and a buffer cap 200 provided as a buffer material for reducing the flow velocity of the electrolyte E at a lower part of the main body 100.

The main body 100 has an inlet 110 formed at an upper part through which the electrolyte E flows in, and an outlet 120 formed at a lower part through which the electrolyte E is discharged, and the electrolyte flow path 130 is formed to communicate the inlet 110 and the outlet 120. Accordingly, the electrolyte E supplied through the inlet 110 moves to the outlet 120 through the electrolyte flow path 130.

The buffer cap 200 is coupled to the outlet 120 of the main body 100.

Specifically, the buffer cap 200 includes a coupling ring 210 coupled to be fixed to the outlet 120, a buffer protrusion 220 located at a center of the coupling ring 210, and at least one fixing bar 230 connecting the buffer protrusion 220 and the coupling ring 210 and supporting the buffer protrusion 220.

The buffer cap 200 includes an opening part formed between the coupling ring 210 and the buffer protrusion 220 spaced apart from the coupling ring 210.

Preferably, the buffer protrusion 220 is positioned at a central position of the opening part formed by the coupling ring 210.

The electrolyte E supplied to the main body 100 is discharged through the opening part of the buffer cap 200 at the outlet 120 position of the main body 100, and is injected into the battery case C.

In order to obtain desired effects, the electrolyte injection device 1000 of the present disclosure may modify the structure of the buffer cap 200 in various ways.

A plurality of embodiments of the buffer cap 200 will be described with reference to FIGS. 4 to 19.

### (First Embodiment)

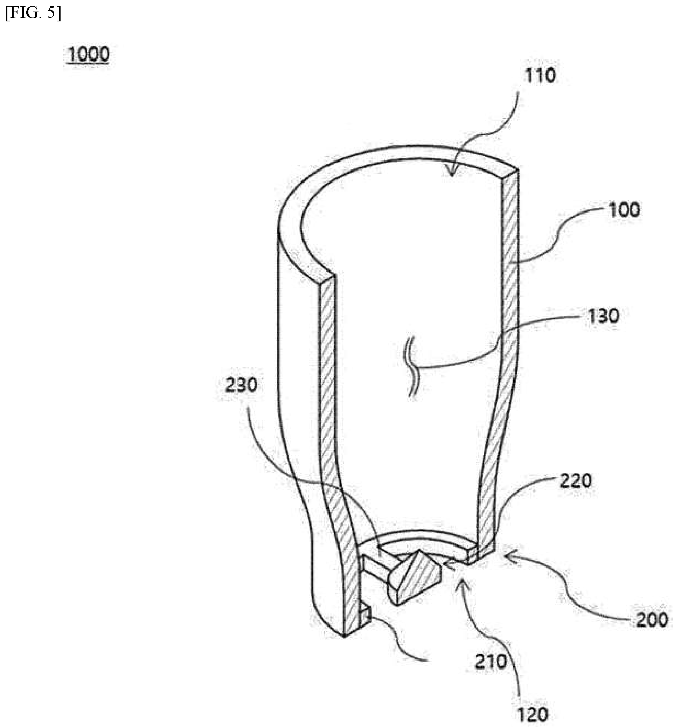

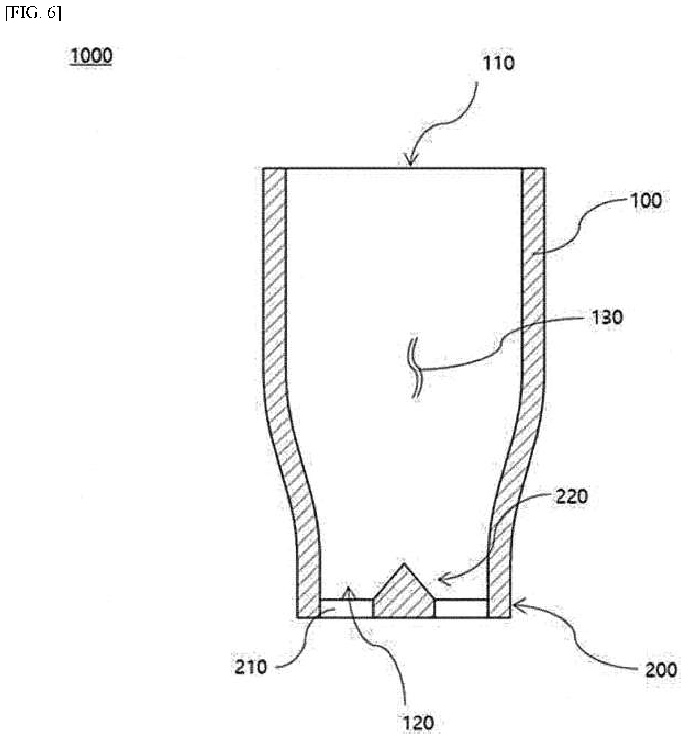

FIG. 4 is a bottom perspective view of the electrolyte injection device 1000 according to the first embodiment of the present disclosure, FIG. 5 is a cross-sectional view obtained by cutting the electrolyte injection device 1000 of FIG. 4 in half, and FIG. 6 is a sectional view showing a cut surface of the electrolyte injection device 1000 of FIG. 5.

The buffer cap 200 is formed to correspond to the shape of the outlet 120 of the main body 100, includes a coupling ring 210 coupled to be fixed to the outlet 120, and includes one fixing bar 230 connecting the coupling ring 210 and the buffer protrusion 220 as shown in FIG. 4.

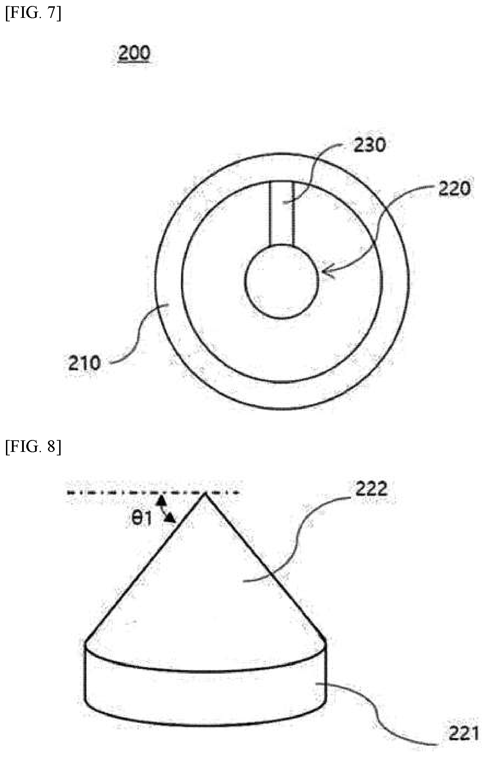

FIG. 7 is a plan view of the buffer cap 200 included in the electrolyte injection device 1000 of FIG. 4.

According to FIG. 7, a coupling ring 210 having a circular ring shape corresponding to a lower end shape of the main body 100 and a buffer protrusion 220 spaced apart from the coupling ring 210 by a predetermined distance are connected to each other and fixed by the fixing bar 230.

As shown in FIG. 7, the electrolyte E may be discharged through the remaining open portion except for the fixing bar 230.

The fixing bar 230 may serve not only to fix the buffer protrusion 220 but also to obstruct part of a movement path of some falling electrolyte E, thereby reducing a movement speed of the electrolyte E, or inducing a dispersion effect of the electrolyte E.

The buffer protrusion 220 has a shape protruding toward the main body 100.

The buffer protrusion 220 protrudes in a horn shape, guides a discharge direction of the electrolyte E colliding with an inclined surface, and also temporarily reduces a speed of the electrolyte E, thereby lowering fluid pressure of the entire discharged electrolyte E.

FIG. 8 is a perspective view of the buffer protrusion 220 included in the buffer cap 200 of FIG. 7.

The buffer protrusion 220 includes a base part 221 which is a portion directly coupled to the fixing bar 230, and a protruding part 222 protruding upward from an upper part of the base part 221.

The base part 221 serves to connect the protruding part 222 to the fixing bar 230, and is formed to correspond to a bottom surface shape of the protruding part 222.

The buffer protrusion 220 may have a cone shape as shown in FIG. 8. More specifically, the protruding part 222 included in the buffer protrusion 220 is in a cone shape.

The cone-shaped protruding part 222 has an inclined surface inclined at a predetermined angle, and the inclination angle θ1 is 50° to 85°. Preferably, the inclination angle θ1 is 55° to 70°. In this case, if the inclination angle θ1 of the protruding part 222 is less than 50°, it may obstruct a path of the electrolyte E pouring downward, and a large amount of bubbles may be generated due to impact upon collision. In addition, if the inclination angle θ1 of the protruding part 222 exceeds 85°, the effect of guiding a movement direction of the electrolyte E and buffering may not be exhibited.

An upper end of the protruding part 222 may be formed to be sharp in an angular shape as shown in FIG. 8, or may be formed to be rounded in a curved shape.

When the protruding part 222 included in the buffer protrusion 220 is in a cone shape as described above, based on a horizontal plane, a diameter ratio of an inner diameter of the coupling ring 210 to an outer diameter of a bottom surface of the buffer protrusion 220 is 1:0.2 to 1:0.5. If the ratio of the buffer protrusion 220 is less than 0.2, the effect of the buffer protrusion 220 may become insignificant, and if the ratio exceeds 0.5, discharge of the electrolyte E may not be smooth due to a problem that the opening is too narrow.

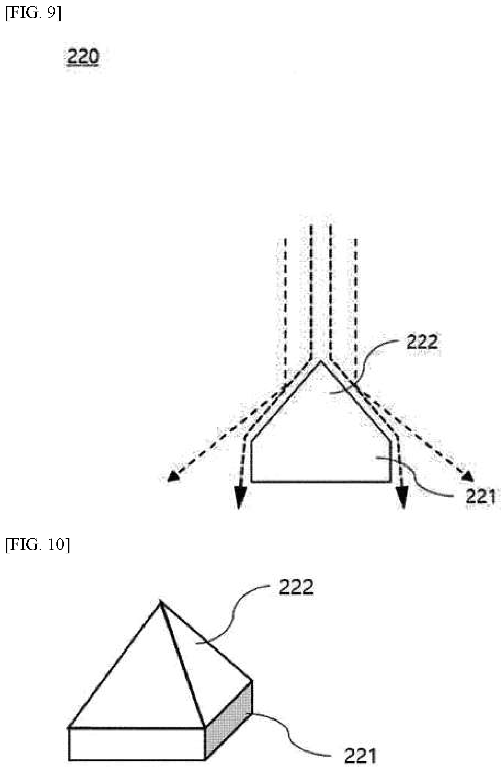

FIG. 9 is a schematic view showing a movement path of the electrolyte E moving to an inclined surface of the buffer protrusion 220 of FIG. 8.

As shown in FIG. 9, the electrolyte E may flow down along the inclined surface of the protruding part 222. In addition, the electrolyte E may bounce off after colliding with the inclined surface of the protruding part 222. In this case, the bounced electrolytes E may obstruct a movement path of the electrolyte E falling vertically, thereby temporarily reducing the movement speed of the electrolyte E.

According to some other embodiments, the protruding part 222 included in the buffer protrusion 220 may be in a pyramid shape.

FIG. 10 is a modified example of the buffer protrusion 220 of FIG. 8.

As shown in FIG. 10, the protruding part 222 may be in a quadrangular pyramid shape.

When the protruding part 222 of the buffer protrusion 220 is in a pyramid shape as described above, based on a horizontal plane, a diameter ratio of an inner diameter of the coupling ring 210 to a diameter of a circumscribed circle of a bottom surface of the buffer protrusion 220 is 1:0.2 to 1:0.5. If the ratio of the buffer protrusion 220 is less than 0.2, the effect of the buffer protrusion 220 may become insignificant, and if the ratio exceeds 0.5, discharge of the electrolyte E may not be smooth due to a problem that the opening is too narrow.

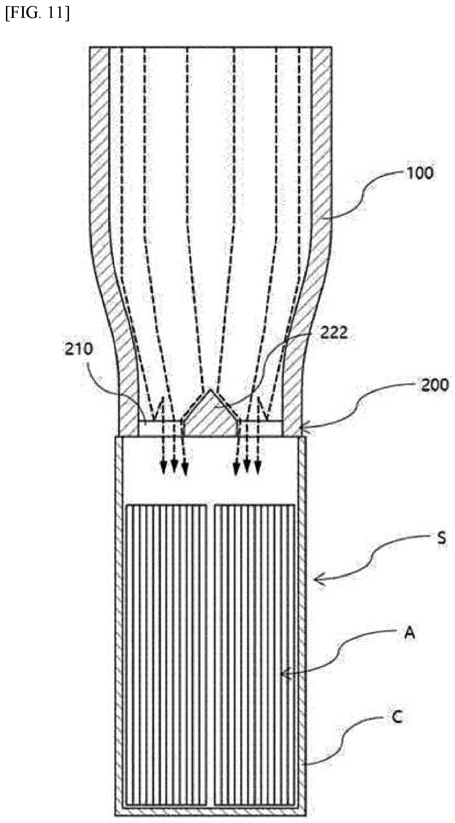

FIG. 11 is a schematic view simply showing movement of the electrolyte E in the electrolyte injection device 1000 of FIG. 4.

The electrolyte E supplied to the main body 100 and moving vertically downward may be bounced by the protruding part 222 at the center as shown in FIG. 11, thereby reducing the movement speed. In addition, if the discharged electrolyte E is concentrated at the center, there is a risk that high pressure may be applied to a portion of the upper end of the electrode assembly A. The protruding part 222 may disperse the discharge direction.

As described above, the buffer cap 200 guides a movement direction of the electrolyte E or reduces the movement speed through the protruding part 222 and the inclined surface configuration of the protruding part 222, thereby buffering impact of the electrolyte E applied to the electrode assembly A.

### (Second Embodiment)

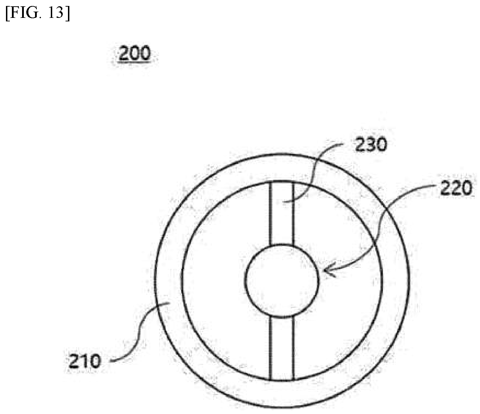

FIG. 12 is a bottom perspective view of the electrolyte injection device 1000 according to the second embodiment of the present disclosure, and FIG. 13 is a plan view of the buffer cap 200 included in the electrolyte injection device 1000 of FIG. 12.

The electrolyte injection device 1000 according to the second embodiment includes two fixing bars 230, and as shown in FIGS. 12 and 13, two fixing bars 230 may be connected to both sides of the buffer protrusion 220.

Each fixing bar 230 has both ends coupled to the coupling ring 210 and the buffer protrusion 220 at positions facing each other, thereby more stably fixing the buffer protrusion 220. In this case, the opening part between the coupling ring 210 and the buffer protrusion 220 may be uniformly partitioned by the fixing bars 230.

### (Third Embodiment)

FIG. 14 is a bottom perspective view of the electrolyte injection device 1000 according to the third embodiment of the present disclosure, and FIG. 15 is a plan view of the buffer cap 200 included in the electrolyte injection device 1000 of FIG. 14.

The electrolyte injection device 1000 according to the third embodiment includes four fixing bars 230, and as shown in FIGS. 14 and 15, four fixing bars 230 may be connected to side surfaces of the buffer protrusion 220.

Each fixing bar 230 has both ends coupled to the coupling ring 210 and the buffer protrusion 220 at four positions, thereby more stably fixing the buffer protrusion 220.

In this case, the opening part between the coupling ring 210 and the buffer protrusion 220 may be uniformly partitioned by the fixing bars 230.

### (Fourth Embodiment)

Since the buffer protrusion 220 of the present disclosure does not have a separate shape at a lower part, when the electrolyte E pours down along an inclined surface, an empty space in which the electrolyte E does not move may be formed in a lower space of the buffer protrusion 220. Air included in the empty space may become bubbles and may be filled into the battery case C together with the electrolyte E, thereby causing defects of the secondary battery S.

Accordingly, the electrolyte injection device 1000 of the present disclosure may modify the lower shape of the buffer protrusion 220 to minimize such an empty space.

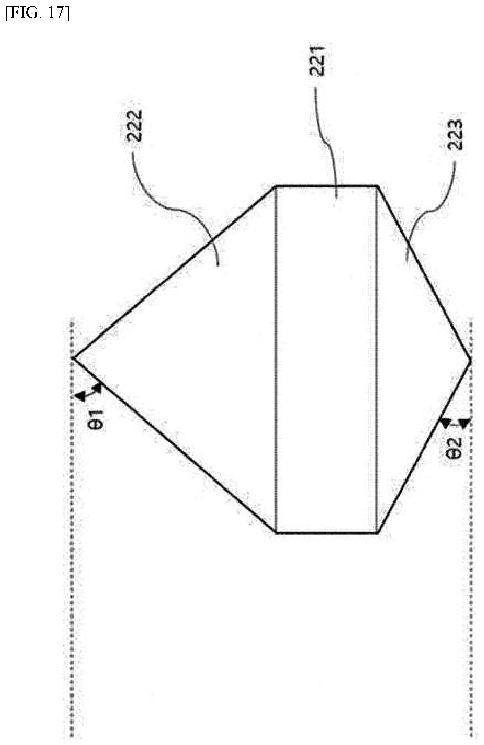

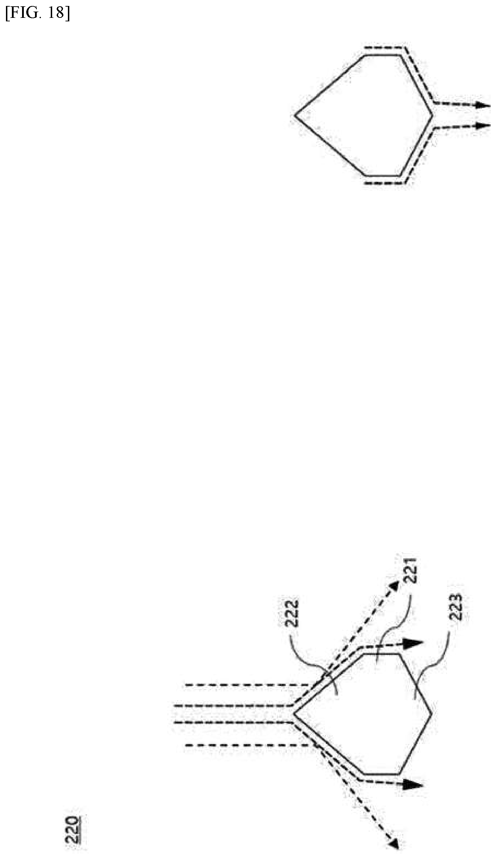

FIG. 16 is a perspective view of the buffer protrusion 220 included in the buffer cap 200 of the electrolyte injection device 1000 according to the fourth embodiment of the present disclosure, FIG. 17 is a side view of the buffer protrusion 220 of FIG. 16, and FIG. 18 is a schematic view showing a movement path of the electrolyte E moving to an inclined surface of the buffer protrusion 220 of FIG. 17.

As shown in FIG. 16, the buffer protrusion 220 included in the electrolyte injection device 1000 according to the fourth embodiment further includes an air removal part 223 protruding downward from a lower part of the base part 221.

Like the protruding part 222, the air removal part 223 may be formed in a shape of any one of a pyramid and a cone.

In the electrolyte injection device 1000 according to the fourth embodiment of the present disclosure, as shown in FIG. 16, both the protruding part 222 and the air removal part 223 have a cone shape.

As shown in FIGS. 16 and 17, the air removal part 223 is formed at a lower part of the buffer protrusion 220 and has an inclined surface in a direction opposite to the protruding part 222.

However, a protruding height of the air removal part 223 may be smaller than a protruding height of the protruding part 222. Therefore, the inclined surface of the air removal part 223 is gentler than the inclined surface of the protruding part 222.

An inclination angle θ2 of the air removal part 223 is 5° to 45°, and preferably 10° to 40°. In this case, if the inclination angle θ2 of the air removal part 223 is less than 5°, the degree of protrusion is too small, and the electrolyte E may become difficult to move along the inclined surface. In addition, even if the inclination angle θ2 of the air removal part 223 exceeds 45°, since no further improvement in effect can be expected, process efficiency may be reduced.

As shown in FIG. 18, the electrolyte E may flow down along the inclined surface of the protruding part 222. Also, the electrolyte E may bounce off after colliding with the inclined surface of the protruding part 222. In this case, the bounced electrolytes E may obstruct a movement path of the electrolyte E falling vertically, thereby temporarily reducing the movement speed of the electrolyte E.

As shown in FIG. 18, the electrolyte E may flow down along the inclined surface of the air removal part 223.

That is, the electrolyte E moves toward the inclined surface of the air removal part 223 at a boundary between the base part 221 and the air removal part 223, so that an empty space is not formed at the lower part of the buffer protrusion 220.

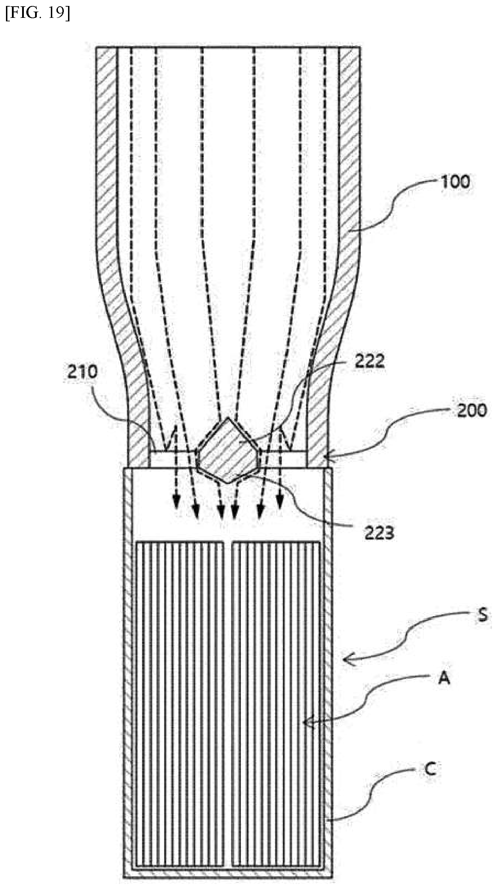

FIG. 19 is a schematic view simply showing movement of the electrolyte E in the electrolyte injection device 1000 including the buffer protrusion 220 of FIG. 16.

The electrolyte E supplied to the main body 100 and moving vertically downward may be bounced by the protruding part 222 at the center as shown in FIG. 19, thereby reducing the movement speed. In addition, if the discharged electrolyte E is concentrated at the center, there is a risk that high pressure may be applied to a portion of the upper end of the electrode assembly A. The protruding part 222 may disperse the discharge direction.

The air removal part 223 guides movement of the electrolyte E, which collides with the protruding part 222 or enters from a side, toward the center of the electrode assembly A.

As described above, the buffer cap 200 guides a movement direction of the electrolyte E or reduces the movement speed through the protruding part 222 and the inclined surface configuration of the protruding part 222, thereby buffering impact of the electrolyte E applied to the electrode assembly A.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

### [Description of Reference Numerals]

1000: ELECTROLYTE INJECTION DEVICE
100: MAIN BODY
110: INLET
120: OUTLET
130: ELECTROLYTE FLOW PATH
200: BUFFER CAP
210: COUPLING RING
220: BUFFER PROTRUSION
221: BASE PART
222: PROTRUDING PART
223: AIR REMOVAL PART
230: FIXING BAR
A: ELECTRODE ASSEMBLY
C: BATTERY CASE
E: ELECTROLYTE
S: SECONDARY BATTERY
θ1: INCLINATION ANGLE OF INCLINED SURFACE OF PROTRUDING PART
θ2: INCLINATION ANGLE OF INCLINED SURFACE OF AIR REMOVAL PART

## Claims

1. An electrolyte injection device for injecting an electrolyte into a cylindrical battery case accommodating an electrode assembly, comprising:
a main body comprising an inlet formed at an upper part through which an electrolyte flows in, an outlet formed at a lower part through which the electrolyte is discharged, and an electrolyte flow path formed to communicate the inlet and the outlet; and
a buffer cap coupled to the outlet, wherein
the buffer cap comprises an opening part formed to allow the electrolyte to pass therethrough and a buffer protrusion protruding toward the main body from a central position of the opening part to guide a discharge direction of the electrolyte.

2. The electrolyte injection device of claim 1, wherein
the buffer cap comprises:
a coupling ring coupled to be fixed to the outlet;
a buffer protrusion; and
at least one fixing bar coupled to the coupling ring and the buffer protrusion to fix the buffer protrusion, wherein
the electrolyte is discharged through the opening part between the coupling ring and the buffer protrusion.

3. The electrolyte injection device of claim 2, wherein
the buffer protrusion comprises:
a base part directly coupled to the fixing bar; and
a protruding part protruding upward from an upper part of the base part, wherein
the protruding part is formed in a shape of any one of a pyramid and a cone.

4. The electrolyte injection device of claim 3, wherein
an inclination angle of the protruding part is 50° to 85°.

5. The electrolyte injection device of claim 3, wherein
the buffer protrusion further comprises an air removal part protruding downward from a lower part of the base part, wherein
a protruding height of the air removal part is smaller than a protruding height of the protruding part.

6. The electrolyte injection device of claim 5, wherein
the air removal part is formed in a shape of any one of a pyramid and a cone.

7. The electrolyte injection device of claim 6, wherein
an inclined surface of the air removal part is gentler than an inclined surface of the protruding part.

8. The electrolyte injection device of claim 6, wherein
an inclination angle of the air removal part is 5° to 45°.

9. The electrolyte injection device of claim 2, wherein
the fixing bar has a cross-sectional shape of at least one of a straight line and a circle.

10. The electrolyte injection device of claim 2, wherein
the buffer cap comprises two or more fixing bars, and
the opening part is uniformly partitioned by the fixing bars.

11. The electrolyte injection device of claim 2, wherein
based on a horizontal plane, a ratio of an inner diameter of the coupling ring to an outer diameter of the buffer protrusion, or a ratio of the inner diameter of the coupling ring to a diameter of a circumscribed circle of the buffer protrusion, is 1:0.2 to 1:0.5.

12. The electrolyte injection device of claim 1, wherein
the electrolyte injection device is disposed such that a lower end of the main body at which the outlet is located is coupled to an upper end of the battery case, thereby injecting the electrolyte into the battery case.

13. The electrolyte injection device of claim 1, wherein
the electrode assembly is accommodated in the battery case in a jelly-roll form.
